# FASCICULE DE BREVET EUROPEEN

(11) **EP 3 472 452 B1**
(45) Date de publication et mention de la délivrance du brevet: **06.01.2021**
(21) Numéro de dépôt: 17736994.9
(22) Date de dépôt: 16.06.2017
(51) Int. Cl.: F02K 1/72, F02K 1/76

(54) **INVERSEUR DE POUSSÉE AVEC RÉGLAGE AXIAL DU CAPOT MOBILE**
SCHUBUMKEHRVORRICHTUNG MIT AXIALER EINSTELLUNG DER VERSCHIEBBAREN HAUBE
THRUST REVERSER WITH AXIAL ADJUSTMENT OF THE TRANSLATING COWL

(30) Priorité: 21.06.2016 FR 1655761
(43) Date de publication de la demande: 24.04.2019
(73) Titulaire: Safran Nacelles, 76700 Gonfreville-l'Orcher (FR)
(72) Inventeur: TABOURET, Alexis, 76700 Gonfreville L'Orcher (FR); LONCLE, Alexis, 76700 Gonfreville L'Orcher (FR)
(74) Mandataire: Delorme, Nicolas
(86) Numéro de dépôt international: PCT/FR2017/051580
(87) Numéro de publication internationale: WO 2017/220898

(56) Documents cités:
- EP-A2- 1 978 232
- FR-A1- 2 978 800
- US-A- 3 779 010
- US-A1- 2016 131 079

## Description

La présente invention se rapporte à un inverseur de poussée pour nacelle de turboréacteur.

Un avion est mû par plusieurs turboréacteurs logés chacun dans une nacelle servant à canaliser les flux d'air engendrés par le turboréacteur qui abrite également un ensemble de dispositifs d'actionnement assurant diverses fonctions lorsque le turboréacteur est en fonctionnement ou à l'arrêt.

Ces dispositifs d'actionnement peuvent comprendre, notamment, un système mécanique d'inversion de poussée.

Une nacelle présente généralement une structure tubulaire comprenant une entrée d'air en amont du turboréacteur, une partie médiane destinée à entourer une soufflante du turboréacteur, une partie aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer par l'intermédiaire des pales de la soufflante, un flux d'air dont une partie, appelée flux chaud ou primaire, circule dans la chambre de combustion du turboréacteur, et dont l'autre partie, appelée flux d'air froid ou secondaire, circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée engendrée par le turboréacteur. Dans cette phase, l'inverseur obstrue la veine du flux d'air froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux d'air froid varient suivant le type d'inverseur. Cependant, dans tous les cas, la structure d'un inverseur comprend des capots (ou portes) mobiles déplaçables entre une position fermée ou « jet direct » dans laquelle ils ferment ce passage et une position ouverte ou « jet inverse » dans laquelle ils ouvrent dans la nacelle un passage destiné au flux dévié. Ces capots peuvent remplir une fonction de déviation ou simplement d'activation d'autres moyens de déviation.

Dans le cas d'un inverseur de poussée à grilles, également connu sous le nom d'inverseur à cascade, la réorientation du flux d'air est effectuée par des grilles de déviation. Ces grilles de déviation sont montées sur une structure fixe de la nacelle, le capot n'ayant qu'une simple fonction de coulissage visant à découvrir ou recouvrir ces grilles.

La translation du capot s'effectue selon un axe longitudinal sensiblement parallèle à l'axe de la nacelle. Des volets d'inversion de poussée, actionnés par le coulissement du capot, permettent une obstruction de la veine du flux d'air froid en aval des grilles de déviation, de manière à optimiser la réorientation du flux d'air froid vers l'extérieur de la nacelle.

Un tel capot peut soit :
- être de forme quasi-annulaire, s'étendant sans interruption d'un côté à l'autre d'un pylône de suspension de l'ensemble formé par le turboréacteur et sa nacelle, un tel capot étant désigné par les termes anglo-saxons « O-duct », par allusion à la forme de virole d'un tel capot, ou
- comprendre en fait deux demi-capots s'étendant chacun sur une demi-circonférence de la nacelle, un tel capot étant désigné par les termes anglo-saxons « D-duct ».

Le coulissement d'un capot entre ses positions « jet direct » et « jet inverse » est classiquement assuré par une pluralité d'actionneurs, de type mécano-électrique (par exemple : vis sans fin actionnée par un moteur électrique et déplaçant un écrou) ou hydraulique (vérins actionnés par de l'huile sous pression).

Typiquement, on trouve quatre ou six actionneurs, à savoir respectivement deux ou trois actionneurs répartis sur chaque moitié de l'inverseur de poussée, de part et d'autre du pylône de suspension.

Les éléments d'actionnement sont montés sur un assemblage de pièces formant la structure fixe. Les défauts de positionnement inhérents à l'assemblage de chaque pièce la structure fixe entraînent des dispersions géométriques et donc un dérèglement du positionnement axial, c'est-à-dire selon l'axe de la nacelle, au niveau de la position d'ancrage de chaque élément d'actionnement. Ce dérèglement du positionnement des éléments d'actionnement peut occasionner des dysfonctionnements lors du déplacement du capot.

Les défauts de positionnement inhérents à l'assemblage de chaque pièce de la structure fixe peuvent en outre entraîner un désalignement des éléments d'actionnement, et provoquer des dysfonctionnements lors du déplacement du capot.

Afin de pallier les dispersions géométriques dues à ces défauts de positionnement, des cales ont été utilisées au niveau du point d'ancrage de l'élément d'actionnement sur le capot, afin d'aligner axialement les éléments d'actionnement.

Toutefois, en cas de nécessité de maintenance sur le capot, ou en cas de changement de celui-ci, il convient de réajuster l'épaisseur de ces cales manuellement. Ces réajustements sont chronophages, ce qui peut entraîner des retards sur les vols et avoir un impact économique conséquent.

La présence de ces cales entraîne en outre un surpoids au niveau de la nacelle mais également au sein de l'aéronef. En effet, il est nécessaire que l'aéronef transporte ces cales en vol afin de pouvoir procéder aux opérations de maintenance sur le capot si nécessaire. Le transport de ces cales implique un poids plus important de l'aéronef, ayant des conséquences en termes de consommation d'énergie et donc d'impact économique.

Il est également connu d'utiliser des éléments d'actionnement réglables en longueur. Toutefois, de tels éléments d'actionnement sont chers et leur réglage doit également se réaliser manuellement en cas d'opérations de maintenance sur le capot.

La présente invention a pour but de remédier à tout ou partie des inconvénients mentionnés ci-dessus.

À cet effet, la présente invention concerne un inverseur de poussée pour dispositif de réception d'un élément de propulsion, tel qu'une nacelle de turboréacteur, l'inverseur de poussée comprenant :
- une structure fixe, comportant un élément de déviation d'au moins une partie d'un flux d'air destiné à circuler dans la nacelle,
- un capot mobile en translation, apte à occuper une position fermée dans laquelle le capot couvre l'élément de déviation du flux d'air et une position ouverte dans laquelle le capot libère l'élément de déviation du flux d'air,
- au moins un actionneur de déplacement configuré pour déplacer le capot entre la position ouverte et la position fermée, l'au moins un actionneur de déplacement comprenant une partie fixe, configurée pour être rapportée sur la structure fixe en une première position d'ancrage et une partie mobile, configurée pour être rapportée sur le capot en une deuxième position d'ancrage,
- un dispositif d'ajustement configuré pour ajuster la première position d'ancrage.

Grâce à ces dispositions, les dispersions géométriques dues aux défauts de positionnement inhérents à l'assemblage d'une pluralité de pièce formant la structure fixe sont compensées. Le bon positionnement axial de l'actionneur de déplacement par rapport à la structure fixe est assuré. L'alignement des actionneurs de déplacement les uns par rapport aux autres est également assuré.

Ces dispositions permettent en outre un de ne pas avoir de réglages à réaliser entre l'au moins un élément d'actionnement et le capot. Ces réglages sont réalisés une seule fois, au niveau de la structure fixe. La durée des opérations de maintenance sur le capot est ainsi limitée.

Ces dispositions permettent également de réduire l'effort exercé sur l'au moins un actionneur de déplacement, ou sur un système de synchronisation des actionneurs de déplacement, s'il y en a plusieurs, ainsi de ralentir leur usure. Le système de synchronisation peut par exemple comprendre un câble de torsion relié aux différents actionneurs.

Selon des caractéristiques optionnelles de l'inverseur de poussée selon l'invention :
- l'actionneur de déplacement comprend un axe de déplacement sensiblement parallèle au mouvement du capot entre la position fermée et la position ouverte ;
- l'actionneur de déplacement peut être rapporté sur la structure fixe par l'intermédiaire d'une interface telle qu'un cardan ou une rotule.
- le dispositif d'ajustement comprend un élément de positionnement configuré pour positionner le premier point d'ancrage en fonction d'une valeur mesurée d'ajustement. Ainsi, les dispersions géométriques dues aux défauts de positionnement inhérents à l'assemblage des pièces de la structure fixe sont compensés. On entend par valeur mesurée d'ajustement, la valeur du défaut de positionnement à compenser par le dispositif d'ajustement. Le défaut de positionnement à compenser est induit par le montage de pièces formant la structure fixe ;
- l'élément de positionnement comprend une surface extérieure, configurée pour coopérer avec la structure fixe, et une surface intérieure configurée pour coopérer avec l'au moins un actionneur de déplacement, la surface extérieure étant définie autour d'un axe central extérieur, la surface intérieure étant définie autour d'un axe central intérieur, l'axe central intérieur pouvant être excentré par rapport à l'axe central extérieur d'une distance d'excentration. Ainsi, les dispersions géométriques dues aux défauts de positionnement inhérents à l'assemblage des pièces de la structure fixe sont compensées par un dispositif simple et léger;
- l'élément de positionnement comprend une bague excentrique ;
- la surface intérieure est circulaire ;
- la surface extérieure est circulaire ;
- la distance d'excentration est mesurée selon l'axe de déplacement de l'au moins un actionneur de déplacement ;
- selon un mode de réalisation de l'invention, la distance d'excentration peut également être mesurée selon un axe transverse, sensiblement perpendiculaire à l'axe de déplacement et à l'axe central extérieur. Ainsi, le dispositif d'ajustement est configuré pour compenser le défaut de positionnement transversal au mouvement de déplacement ;
- l'axe central intérieur peut également être excentré selon une composante de l'axe de déplacement et l'axe transverse ;
- la distance d'excentration est négative, positive ou nulle par rapport à l'axe central extérieur;
- la valeur absolue de la distance d'excentration est comprise entre 0 et 1,2 millimètres ;
- les caractéristiques géométriques de l'élément de positionnement sont déterminées en fonction de la valeur mesurée d'ajustement ;
- le dispositif d'ajustement comprend un élément de verrouillage configuré pour empêcher le mouvement du dispositif d'ajustement par rapport à la structure fixe et à la partie fixe de l'au moins un actionneur de déplacement. Grâce à ces dispositions, le réglage de la première position d'ancrage est maintenu et réduit le risque de dysfonctionnement en vol ;
- la structure fixe comprend une portion de coopération configurée pour coopérer avec l'élément de verrouillage du dispositif d'ajustement ;
- l'élément de verrouillage est configuré pour verrouiller la position de l'élément de positionnement ;
- l'élément de verrouillage comprend un doigt ;
- le doigt est venu de matière avec l'élément de positionnement ;
- le doigt comprend un orifice ;
- l'orifice peut être taraudé ;
- l'élément de verrouillage comprend en outre une tige configurée pour s'insérer dans l'orifice ;
- la tige comprend un filetage ;
- la structure fixe comprend un une ouverture au niveau de la portion de coopération ;
- La tige est configurée pour s'insérer dans l'ouverture ;
- l'ouverture est taraudée ;
- la tige est configurée pour être vissée dans l'ouverture de façon à bloquer les mouvements du dispositif d'ajustement ;
- la zone de coopération s'étend selon un angle compris entre 0 et 180 ;
- la zone de coopération comprend une fente configurée pour recevoir l'élément de verrouillage ;
- selon d'autres modes de réalisation de l'invention, l'élément de verrouillage est configuré pour empêcher le mouvement du dispositif d'ajustement par rapport à la structure fixe et à la partie fixe de l'au moins un actionneur de déplacement par différentes techniques bien connues de l'homme du métier, à savoir par vissage, par soudure, par collage, par déformation de la bague excentrique, par encastrement avec indicateur visuel de positionnement, par brochage de la bague, par clavette, par rivetage, par rabat de tôle sur le flanc de la bague ;
- selon un mode de réalisation, le dispositif d'ajustement est également configuré pour
- le dispositif d'ajustement est apte à occuper une pluralité de positions d'ajustement par rapport à la structure fixe et à la partie fixe de l'au moins un élément d'actionnement. Ainsi, le dispositif d'ajustement est apte à s'adapter à différentes structures fixes. En effet, l'axe central intérieur étant excentré par rapport à l'axe central extérieur, s'il est déplacé en rotation, la distance entre la surface intérieure et la surface extérieure varie et permet de positionner la première position d'ancrage en fonction de la valeur mesurée d'ajustement ;
- une position d'ajustement parmi la pluralité de positions d'ajustement est choisie en fonction de la valeur mesurée d'ajustement ;
- une position d'ajustement parmi la pluralité de positions d'ajustement est choisie en fonction de la valeur d'excentration ;
- le dispositif d'ajustement est mobile en rotation entre la pluralité de positions d'ajustement ;
- la structure fixe comprend une pluralité d'éléments d'indexation configurés pour coopérer avec l'élément de verrouillage, chaque élément d'indexation parmi la pluralité d'éléments d'indexation correspondant à une position d'ajustement parmi la pluralité de positions d'ajustement ;
- la distance d'excentration est sensiblement égale à la valeur mesurée d'ajustement ;
- l'inverseur de poussée comprend un dispositif d'ajustement conforme aux caractéristiques mentionnées ci-dessus configuré pour ajuster la deuxième position d'ancrage, en complément de l'ajustement de la première position d'ancrage.

La présente invention se rapporte également à une nacelle pour turboréacteur comprenant un inverseur de poussée conforme à l'une quelconque des caractéristiques susmentionnées.

La présente invention se rapporte en outre à une utilisation d'un élément d'ajustement dans un inverseur de poussée pour dispositif de réception d'un élément de propulsion, tel qu'une nacelle de turboréacteur, l'inverseur de poussée comprenant :
- une structure fixe, comportant un élément de déviation d'au moins une partie d'un flux d'air destiné à circuler dans la nacelle,
- un capot mobile en translation, apte à occuper une position fermée dans laquelle le capot couvre l'élément de déviation du flux d'air, en assurant ainsi la continuité aérodynamique de la nacelle, et une position ouverte dans laquelle le capot libère l'élément de déviation du flux d'air,
- au moins un actionneur de déplacement configuré pour déplacer le capot entre la position ouverte et la position fermée, chaque actionneur de déplacement comprenant une partie fixe, configurée pour être rapportée sur la structure fixe en une première position d'ancrage et une partie mobile, configurée pour être rapportée sur le capot en une deuxième position d'ancrage,
le dispositif d'ajustement étant utilisé pour ajuster la première position d'ancrage.

D'autres caractéristiques et avantages de la présente invention apparaîtront à la lumière de la description qui va suivre et à l'examen des figures ci-annexées, dans lesquelles :
- la figure 1 est une représentation schématique globale d'une nacelle de turboréacteur présentant un inverseur de poussée, dont l'intérieur est vu en transparence ;
- la figure 2 est une représentation schématique en demi-coupe longitudinale de la nacelle de la figure 1 ;
- les figures 3 et 4 sont des vues générales d'un inverseur de poussée ;
- la figure 5 illustre une vue de face de l'inverseur de poussée des figures 3 et 4 ;
- les figures 6 et 7 représentent une vue en coupe d'un inverseur de poussée dont le capot est respectivement en position ouverte et fermée ;
- la figure 8 représente une vue éclatée de la première position d'ancrage de l'actionneur de déplacement du capot ;
- la figure 9 représente un dispositif d'ajustement de la première position d'ancrage de l'actionneur de déplacement du capot.

Sur l'ensemble de ces figures, des références identiques ou analogues désignent des organes ou ensemble d'organes identiques ou analogues.

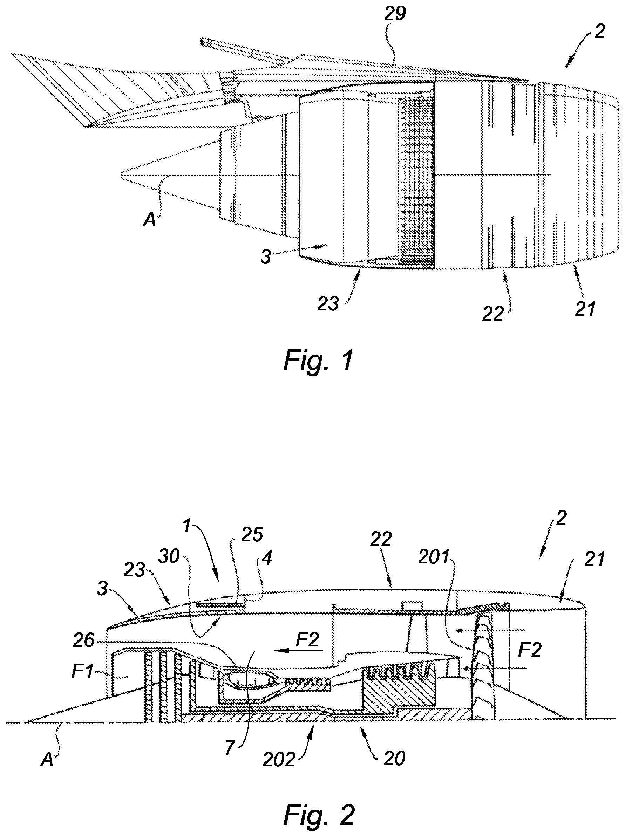

Sur les figures 1 et 2, il est représenté une nacelle 2 destinée à constituer un logement tubulaire pour un turboréacteur 20, par exemple double flux. La nacelle 2 sert à canaliser un flux de gaz chauds F1 et un flux d'air F2 froid engendrés pas le turboréacteur 20, comme indiqué dans le préambule de la présente description.

La nacelle 1 est destinée à être suspendue à un pylône 29. Le pylône 29 est lui-même fixé sous une aile d'un aéronef.

Comme indiqué précédemment, la nacelle 2 comprend une partie amont 21 formant une entrée d'air, une partie médiane 22 et une partie aval 23. La partie aval 23 entoure le turboréacteur 20. Le turboréacteur 20 comprend une soufflante 201 et un corps 202. La soufflante 201 est disposée au niveau de la partie médiane 22, et le corps 202 est disposé au niveau de la partie aval.

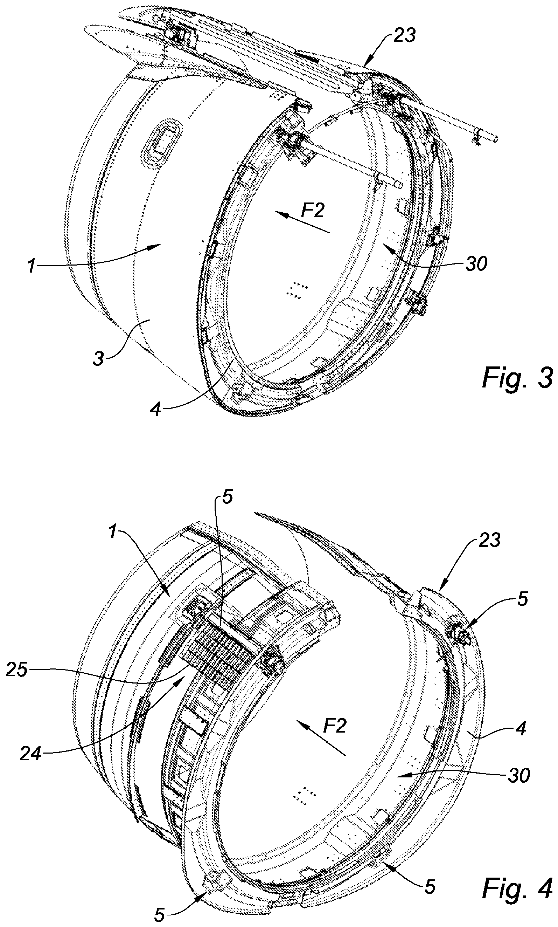

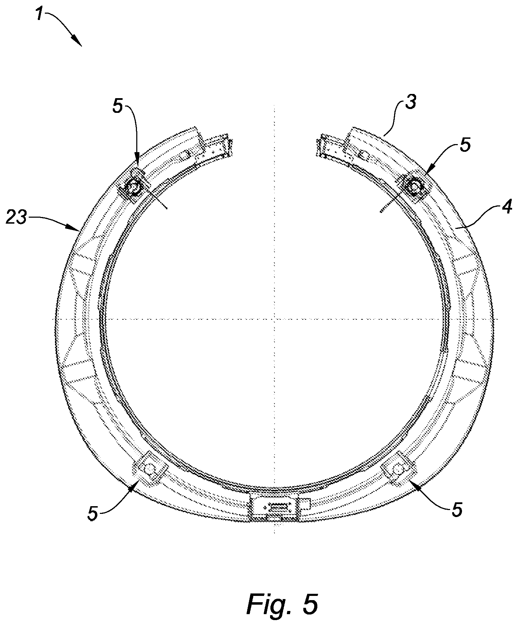

La partie aval 23, représentée en figures 3, 4 et 5, comprend une structure externe 30 comportant un inverseur de poussée 1 et une structure interne 26 de carénage du moteur 3 du turboréacteur 20 définissant avec la structure externe 30 une veine 7 du flux d'air F2, dans le cas de la nacelle 2 de turboréacteur 20 double flux telle que présentée ici.

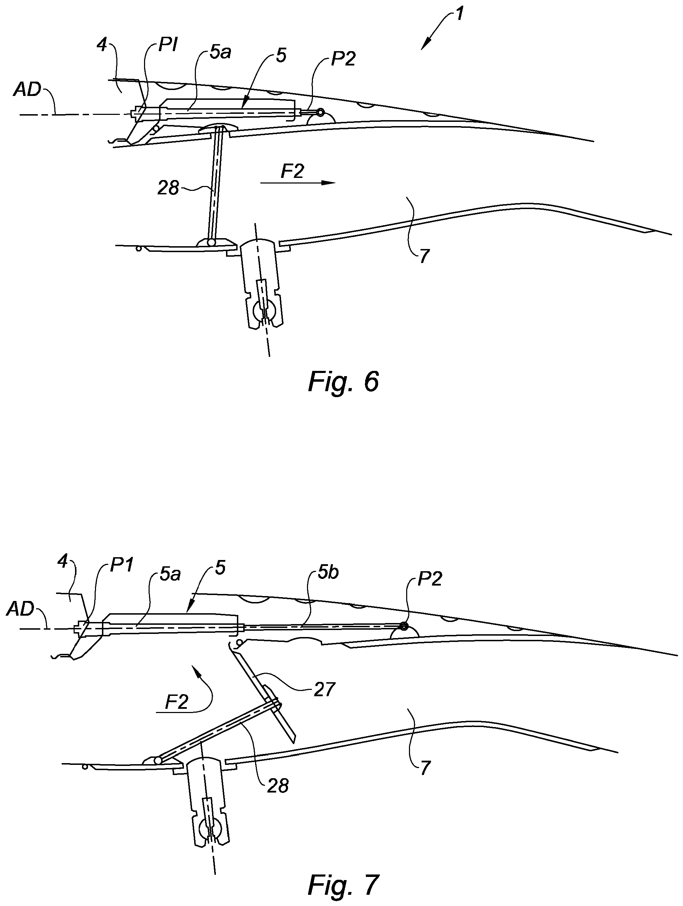

L'inverseur de poussée 1, plus particulièrement représenté en figures 6 et 7, comprend une structure fixe 4 et un capot 3, monté sur la structure fixe 4. Le capot 3 est de forme quasi-annulaire. L'inverseur de poussée 1 comprend en outre un élément de déviation 24, ici des grilles de déviation 25 du flux d'air F2. Les grilles de déviation 25 sont fixées à la structure fixe 4. Les grilles de déviation 25 présentent chacune une pluralité d'aubes déflectrices.

Le capot 3 est mobile en translation par rapport à la structure fixe 4 selon une direction sensiblement parallèle un l'axe longitudinal A de la nacelle 2. Le capot 3 est apte à occuper une position fermée (figure 6) dans laquelle il assure la continuité aérodynamique des lignes de la partie aval 23 de la nacelle 2 et couvre les grilles de déviation 25, et une position ouverte (figure 7) dans laquelle il libère les grilles de déviation 25. Le capot 3 passe de la position fermée à la position ouverte, et inversement, en coulissant le long de rails (non représentés).

Le déplacement du capot 3 de la position fermée à la position ouverte dégage donc une ouverture à travers laquelle au moins une portion du flux d'air F2 peut s'échapper. En outre, la nacelle 2 comprend un élément d'obstruction 27, et au moins une bielle 28. La bielle 28 est reliée à l'élément d'obstruction 27. L'élément d'obstruction 27 est configuré pour occuper une position escamotée (figure 6), lorsque le capot 3 est en position fermée et une position d'obstruction (figure 7), lorsque le capot 3 est en position ouverte. L'au moins une portion de flux d'air F2 est ensuite orientée vers la partie amont 21 de la nacelle 2 par les grilles de déviation 25, engendrant ainsi une contre-poussée contribuant au freinage de l'avion.

L'inverseur de poussée 1 comprend en outre au moins un actionneur de déplacement 5, ici quatre actionneurs de déplacement 5 configurés pour déplacer le capot 3 entre la position ouverte et la position fermée. Chaque actionneur de déplacement 5 comprend une partie fixe 5a, configurée pour être rapportée sur la structure fixe 4 en une première position d'ancrage P1, et une partie mobile 5b, configurée pour être rapportée sur le capot 3 en une deuxième position d'ancrage P2.

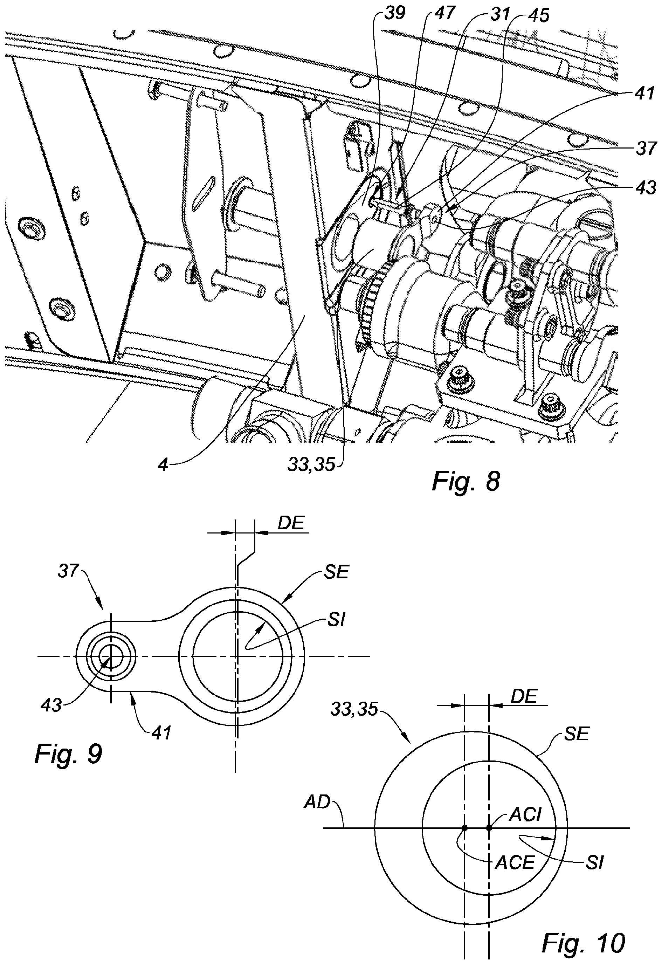

L'inverseur de poussée 1 comprend en outre un dispositif d'ajustement 31, représenté en figures 8 et 9 configuré pour ajuster la première position d'ancrage P1.

Ainsi, les dispersions géométriques dues aux défauts de positionnement inhérents à l'assemblage d'une pluralité de pièce formant la structure fixe sont compensées. Le bon positionnement axial de l'actionneur de déplacement par rapport à la structure fixe est assuré. L'alignement des actionneurs de déplacement 5 les uns par rapport aux autres est également assuré.

Les actionneurs de déplacement 5 comprennent chacun un axe de déplacement AD sensiblement parallèle au mouvement du capot 3 entre la position fermée et la position ouverte et à l'axe A de la nacelle 2.

Les actionneurs de déplacement 5 peuvent être rapportés sur la structure fixe 4 par l'intermédiaire d'une interface telle qu'un cardan.

Le dispositif d'ajustement 31 comprend un élément de positionnement 33 configuré pour positionner le premier point d'ancrage P1 en fonction d'une valeur mesurée d'ajustement.

On entend par valeur mesurée d'ajustement, la valeur du défaut de positionnement à compenser par le dispositif d'ajustement 31. Le défaut de positionnement à compenser est induit par le montage de pièces formant la structure fixe 4.

L'élément de positionnement 33 est plus particulièrement représenté en figure 10, et comprend une bague excentrique 35. L'élément de positionnement 33, et plus particulièrement la bague excentrique 35, comprennent une surface extérieure SE configurée pour coopérer avec la structure fixe 4. L'élément de positionnement 33, et plus particulièrement la bague excentrique 35, comprennent en outre une surface intérieure SI configurée pour coopérer avec les actionneurs de déplacement 5. La surface extérieure SE est définie autour d'un axe central extérieur ACE. La surface intérieure SI est définie autour d'un axe central intérieur ACI. L'axe central intérieur ACI est excentré par rapport à l'axe central extérieur ACE d'une distance d'excentration DE.

Les surfaces intérieure et extérieure SI, SE sont circulaires.

La distance d'excentration DE est mesurée selon l'axe de déplacement AD de chaque actionneur de déplacement 5. La distance d'excentration DE peut être négative, positive ou nulle par rapport à l'axe central extérieur ACE. La valeur absolue de la distance d'excentration DE est comprise entre 0 et 1,2 millimètres.

Selon un mode de réalisation de l'invention non représenté, la distance d'excentration DE peut également être mesurée selon un axe transverse, sensiblement perpendiculaire à l'axe de déplacement AD et à l'axe central extérieur ACE. Ainsi, le dispositif d'ajustement 31 est configuré pour compenser le défaut de positionnement transversal au mouvement de déplacement. L'axe central intérieur ACI peut également être excentré selon une composante de l'axe de déplacement AD et l'axe transverse.

Selon un premier mode de réalisation de l'invention, la distance d'excentration DE est sensiblement égale à la valeur mesurée d'ajustement.

Les caractéristiques géométriques de l'élément de positionnement 33, notamment la distance d'excentration DE sont donc déterminées en fonction de la valeur mesurée d'ajustement.

Dans ce premier mode de réalisation les bagues excentriques 35 sont choisies parmi une gamme de bagues excentriques 35 pour chaque structure fixe 4 et pour chaque actionneur de déplacement 5.

Le dispositif d'ajustement 31 comprend en outre un élément de verrouillage 37 configuré pour empêcher le mouvement en rotation du dispositif d'ajustement 31 par rapport à la structure fixe 4 et à la partie fixe 5a de chaque actionneur de déplacement 5. L'élément de verrouillage 37 est configuré pour verrouiller la position de l'élément de positionnement 33.

La structure fixe 4 comprend une portion de coopération 39 configurée pour coopérer avec l'élément de verrouillage 37 du dispositif d'ajustement 31.

La portion de coopération 39 s'étend selon un angle compris entre 0 et 180°.

Selon un mode de réalisation de l'invention, l'élément de verrouillage 37 comprend un doigt 41. Le doigt 41 est venu de matière avec la bague excentrique 35. Le doigt 41 comprend un orifice 43. L'orifice 43 peut être taraudé. L'élément de verrouillage 37 comprend en outre une tige 45 configurée pour s'insérer dans l'orifice 43. La tige 45 comprend un filetage. La structure fixe 4 comprend une ouverture 47 au niveau de la portion de coopération 39. La tige 45 est configurée pour s'insérer dans l'ouverture 47. L'ouverture 47 est taraudée. La tige 45 est configurée pour être vissée dans l'ouverture 47 de façon à bloquer les mouvements du dispositif d'ajustement 31.

Selon d'autres modes de réalisation de l'élément de verrouillage 37, l'élément de verrouillage 37 est configuré pour empêcher le mouvement du dispositif d'ajustement 31 par rapport à la structure fixe 4 et à la partie fixe 5a de chaque un actionneur de déplacement 5 par différentes techniques bien connues de l'homme du métier, à savoir par vissage, par soudure, par collage, par déformation de la bague excentrique, par encastrement avec indicateur visuel de positionnement, par brochage de la bague, par clavette, par rivetage, par rabat de tôle sur le flanc de la bague.

Selon le premier mode de réalisation, l'élément de verrouillage 37 est configuré pour empêcher le mouvement du dispositif d'ajustement 31 par rapport à la structure fixe 4 et à la partie fixe 5a de chaque un actionneur de déplacement 5 dans une seule position.

Selon un deuxième mode de réalisation (non représenté), le dispositif d'ajustement 31 est apte à occuper une pluralité de positions d'ajustement par rapport à la structure fixe 4 et à la partie fixe 5a de chaque élément d'actionnement 5.

Ainsi, le dispositif d'ajustement 31 est apte à s'adapter à différentes structures fixes 4. En effet, l'axe central intérieur ACI étant excentré par rapport à l'axe central extérieur ACE, s'il est déplacé en rotation, la distance entre la surface intérieure SI et la surface extérieure SE varie et permet de positionner la première position d'ancrage P1 en fonction de la valeur mesurée d'ajustement.

On choisit donc une position d'ajustement parmi la pluralité de positions d'ajustement en fonction de la valeur mesurée d'ajustement et de la distance d'excentration.

Le dispositif d'ajustement 31 est mobile en rotation entre la pluralité de positions d'ajustement.

Selon une première variante du deuxième mode de réalisation, la portion de coopération 39 comprend une fente configurée pour recevoir l'élément de verrouillage.

Selon une deuxième variante du deuxième mode de réalisation, la structure fixe 4 comprend une pluralité d'éléments d'indexation configurés pour coopérer avec l'élément de verrouillage 37, chaque élément d'indexation parmi la pluralité d'éléments d'indexation correspondant à une position d'ajustement parmi la pluralité de positions d'ajustement.

Chaque élément d'indexation parmi la pluralité d'éléments d'indexation comprend une ouverture d'indexation. Les ouvertures d'indexation sont réparties sur la portion de coopération 39.

Selon un autre mode de réalisation de l'inverseur de poussée, le dispositif d'ajustement 31 peut également être utilisé pour ajuster la deuxième position d'ancrage P2, en complément de l'ajustement de la première position d'ancrage P1.

Bien entendu, la présente invention ne se limite pas aux modes de réalisation décrits et représentés, fournis à titre d'exemples illustratifs et non limitatifs.

## Revendications

1. Inverseur de poussée pour dispositif de réception d'un élément de propulsion, tel qu'une nacelle (2) de turboréacteur (20), l'inverseur de poussée (1) comprenant :
- une structure fixe (4), comportant un élément de déviation (24) d'au moins une partie d'un flux d'air (F2) destiné à circuler dans la nacelle (2),
- un capot (3) mobile en translation, apte à occuper une position fermée dans laquelle le capot (3) couvre l'élément de déviation (24) du flux d'air (F2) et une position ouverte dans laquelle le capot (3) libère l'élément de déviation (24) du flux d'air (F2),
- au moins un actionneur de déplacement (5) configuré pour déplacer le capot (3) entre la position ouverte et la position fermée, l'au moins un actionneur de déplacement (5) comprenant une partie fixe (5a), configurée pour être rapportée sur la structure fixe (4) en une première position d'ancrage (P1) et une partie mobile (5b), configurée pour être rapportée sur le capot (3) en une deuxième position d'ancrage (P2),
**caractérisé en ce qu'**il comprend également
- un dispositif d'ajustement (31) configuré pour ajuster la première position d'ancrage (P1).

2. Inverseur de poussée selon la revendication 1, dans laquelle le dispositif d'ajustement (31) comprend un élément de positionnement (33) configuré pour positionner le premier point d'ancrage (P1) en fonction d'une valeur mesurée d'ajustement.

3. Inverseur de poussée selon la revendication 2, dans laquelle l'élément de positionnement (33) comprend une surface extérieure (SE), configurée pour coopérer avec la structure fixe (4), et une surface intérieure (SI) configurée pour coopérer avec l'au moins un actionneur de déplacement (5), la surface extérieure (SE) étant définie autour d'un axe central extérieur (ACE), la surface intérieure (SI) étant définie autour d'un axe central intérieur (ACI), l'axe central intérieur (ACI) étant apte à être excentré par rapport à l'axe central extérieur (ACE) d'une distance d'excentration (DE).

4. Inverseur de poussée selon l'une des revendications 2 ou 3 dans lequel l'élément de positionnement (33) comprend une bague excentrique (35).

5. Inverseur de poussée selon l'une des revendications précédentes, dans lequel le dispositif d'ajustement (31) comprend un élément de verrouillage (37) configuré pour empêcher le mouvement du dispositif d'ajustement (31) par rapport à la structure fixe (4) et à la partie fixe (5a) de l'au moins un actionneur de déplacement (5).

6. Inverseur de poussée selon l'une des revendications précédentes, dans lequel le dispositif d'ajustement (31) est apte à occuper une pluralité de positions d'ajustement par rapport à la structure fixe (5) et à la partie fixe (5a) de l'au moins un élément d'actionnement (5).

7. Inverseur de poussée selon les revendications 5 et 6, dans laquelle la structure fixe (4) comprend une pluralité d'éléments d'indexation configurés pour coopérer avec l'élément de verrouillage (37), chaque élément d'indexation parmi la pluralité d'éléments d'indexation correspondant à une position d'ajustement parmi la pluralité de positions d'ajustement.

8. Inverseur de poussée selon l'une des revendications 3 à 5, dans lequel la distance d'excentration (DE) est sensiblement égale à la valeur mesurée d'ajustement.

9. Nacelle pour turboréacteur comprenant un inverseur de poussée (1) conforme à l'une quelconque des revendications précédentes.

10. Utilisation d'un dispositif d'ajustement (31) dans un inverseur de poussée (1) pour dispositif de réception d'un élément de propulsion, tel qu'une nacelle (2) de turboréacteur (20), l'inverseur de poussée (1) comprenant :
- une structure fixe (4), comportant un élément de déviation (24) d'au moins une partie d'un flux d'air (F2) destiné à circuler dans la nacelle (2),
- un capot (3) mobile en translation, apte à occuper une position fermée dans laquelle le capot (3) couvre l'élément de déviation (24) du flux d'air (F2), en assurant ainsi la continuité aérodynamique de la nacelle (2), et une position ouverte dans laquelle le capot (3) libère l'élément de déviation (24) du flux d'air (F2),
- au moins un actionneur de déplacement (5) configuré pour déplacer le capot (3) entre la position ouverte et la position fermée, chaque actionneur de déplacement (5) comprenant une partie fixe (5a), configurée pour être rapportée sur la structure fixe (4) en une première position d'ancrage (P1) et une partie mobile (5b), configurée pour être rapportée sur le capot (3) en une deuxième position d'ancrage (P2),
le dispositif d'ajustement (31) étant utilisé pour ajuster la première position d'ancrage (P1).

## Patentansprüche

1. Schubumkehrvorrichtung für eine Einrichtung zur Aufnahme eines Antriebselements, wie etwa eine Gondel (2) eines Turbostrahltriebwerks (20), wobei die Schubumkehrvorrichtung (1) umfasst:
- eine festsitzende Struktur (4), umfassend ein Umleitelement (24) für mindestens einen Teil eines Luftstroms (F2), der dazu bestimmt ist, in der Gondel (2) zu zirkulieren,
- eine verschiebbare Haube (3), die fähig ist, eine geschlossene Position einzunehmen, in der die Haube (3) das Umleitelement (24) des Luftstroms (F2) bedeckt, und eine offene Position, in der die Haube (3) das Umleitelement (24) des Luftstroms (F2) freilegt,
- mindestens ein Verschiebungsstellglied (5), das ausgestaltet ist, die Haube (3) zwischen der offenen Position und der geschlossenen Position zu verschieben, wobei das mindestens eine Verschiebungsstellglied (5) einen festsitzenden Teil (5a) umfasst, der ausgestaltet ist, auf der festsitzenden Struktur (4) in einer ersten Verankerungsposition (P1) angebracht zu werden, und einen beweglichen Teil (5b), der ausgestaltet ist, auf der Haube (3) in einer zweiten Verankerungsposition (P2) angebracht zu werden,
**dadurch gekennzeichnet, dass** sie ebenfalls umfasst
- eine Einstelleinrichtung (31), die ausgestaltet ist, die erste Verankerungsposition (P1) einzustellen.

2. Schubumkehrvorrichtung nach Anspruch 1, wobei die Einstelleinrichtung (31) ein Positionierelement (33) umfasst, das ausgestaltet ist, den ersten Verankerungspunkt (P1) in Abhängigkeit von einem gemessenen Einstellwert zu positionieren.

3. Schubumkehrvorrichtung nach Anspruch 2, wobei das Positionierelement (33) eine äußere Oberfläche (SE) umfasst, die ausgestaltet ist, mit der festsitzenden Struktur (4) zusammenzuwirken, und eine innere Oberfläche (S1), die ausgestaltet ist, mit dem mindestens einen Verschiebungsstellglied (5) zusammenzuwirken, wobei die äußere Oberfläche (SE) um eine äußere Mittelachse (ACE) definiert ist, wobei die innere Oberfläche (S1) um eine innere Mittelachse (ACI) definiert ist, wobei die innere Mittelachse (ACI) fähig ist, in Bezug auf die äußere Mittelachse (ACE) um eine Mittenabweichung (DE) außermittig zu verlaufen.

4. Schubumkehrvorrichtung nach einem der Ansprüche 2 oder 3, wobei das Positionierelement (33) einen Exzenterring (35) umfasst.

5. Schubumkehrvorrichtung nach einem der vorstehenden Ansprüche, wobei die Einstelleinrichtung (31) ein Verriegelungselement (37) umfasst, das ausgestaltet ist, die Bewegung der Einstelleinrichtung (31) in Bezug auf die festsitzende Struktur (4) und auf den festsitzenden Teil (5a) des mindestens einen Verschiebungsstellglieds (5) zu verhindern.

6. Schubumkehrvorrichtung nach einem der vorstehenden Ansprüche, wobei die Einstelleinrichtung (31) fähig ist, eine Vielzahl von Einstellpositionen in Bezug auf die festsitzende Struktur (5) und auf den festsitzenden Teil (5a) des mindestens einen Verschiebungsstellglieds (5) einzunehmen.

7. Schubumkehrvorrichtung nach Anspruch 5 und 6, wobei die festsitzende Struktur (4) eine Vielzahl von Indexierungselementen umfasst, die ausgestaltet sind, mit dem Verriegelungselement (37) zusammenzuwirken, wobei jedes Indexierungselement aus der Vielzahl von Indexierungselementen einer Einstellposition aus der Vielzahl von Einstellpositionen entspricht.

8. Schubumkehrvorrichtung nach einem der Ansprüche 3 bis 5, wobei die Mittenabweichung (DE) im Wesentlichen gleich ist wie der gemessene Einstellwert.

9. Gondel für ein Turbostrahltriebwerk, umfassend eine Schubumkehrvorrichtung (1) nach einem der vorstehenden Ansprüche.

10. Verwendung einer Einstelleinrichtung (31) in einer Schubumkehrvorrichtung (1) für eine Einrichtung zur Aufnahme eines Antriebselements, wie etwa eine Gondel (2) eines Turbostrahltriebwerks (20), wobei die Schubumkehrvorrichtung (1) umfasst:
- eine festsitzende Struktur (4), umfassend ein Umleitelement (24) für mindestens einen Teil eines Luftstroms (F2), der dazu bestimmt ist, in der Gondel (2) zu zirkulieren,
- eine verschiebbare Haube (3), die fähig ist, eine geschlossene Position einzunehmen, in der die Haube (3) das Umleitelement (24) des Luftstroms (F2) bedeckt, indem sie die aerodynamische Kontinuität der Gondel (2) sicherstellt, und eine offene Position, in der die Haube (3) das Umleitelement (24) des Luftstroms (F2) freilegt,
- mindestens ein Verschiebungsstellglied (5), das ausgestaltet ist, die Haube (3) zwischen der offenen Position und der geschlossenen Position zu verschieben, wobei jedes Verschiebungsstellglied (5) einen festsitzenden Teil (5a) umfasst, der ausgestaltet ist, auf der festsitzenden Struktur (4) in einer ersten Verankerungsposition (P1) angebracht zu werden, und einen beweglichen Teil (5b), der ausgestaltet ist, auf der Haube (3) in einer zweiten Verankerungsposition (P2) angebracht zu werden,
wobei die Einstelleinrichtung (31) verwendet wird, um die erste Verankerungsposition (P1) einzustellen.

## Claims

1. A thrust reverser for a device for receiving a propulsion element, such as a nacelle (2) of a turbojet engine (20), the thrust reverser (1) comprising:
- a fixed structure (4), including an element (24) for diverting at least one portion of an air flow (F2) intended to circulate in the nacelle (2),
- a cowl (3) which is movable in translation, adapted to occupy a closed position in which the cowl (3) covers the element (24) for diverting the air flow (F2) and an open position in which the cowl (3) releases the element (24) for diverting the air flow (F2),
- at least one displacement actuator (5) configured to displace the cowl (3) between the open position and the closed position, the at least one displacement actuator (5) comprising a fixed portion (5a), configured to be directly mounted on the fixed structure (4) at a first anchoring position (P1) and a movable portion (5b), configured to be directly mounted on the cowl (3) at one second anchoring position (P2),
**characterized in that** it also comprises
- an adjustment device (31) configured to adjust the first anchoring position (P1).

2. The thrust reverser according to claim 1, wherein the adjustment device (31) comprises a positioning element (33) configured to position the first anchor point (P1) depending on a measured adjustment value.

3. The thrust reverser according to claim 2, wherein the positioning element (33) comprises an outer surface (SE), configured to cooperate with the fixed structure (4), and an inner surface (SI) configured to cooperate with the at least one displacement actuator (5), the outer surface (SE) being defined about an outer central axis (ACE), the inner surface (SI) being defined about an inner central axis (ACI), the inner central axis (ACI) being adapted to be eccentric relative to the outer central axis (ACE) by an eccentric distance (DE).

4. The thrust reverser according to any of claims 2 or 3 wherein the positioning element (33) comprises an eccentric ring (35).

5. The thrust reverser according to any of the preceding claims, wherein the adjustment device (31) comprises a locking element (37) configured to prevent the movement of the adjustment device (31) relative to the fixed structure (4) and the fixed portion (5a) of the at least one displacement actuator (5).

6. The thrust reverser according to any of the preceding claims, wherein the adjustment device (31) is adapted to occupy a plurality of adjustment positions relative to the fixed structure (5) and the fixed portion (5a) of the at least one actuating element (5).

7. The thrust reverser according to claims 5 and 6, wherein the fixed structure (4) comprises a plurality of indexing elements configured to cooperate with the locking element (37), each indexing element among the plurality of indexing elements corresponding to an adjustment position among the plurality of adjustment positions.

8. The thrust reverser according to any of claims 3 to 5, wherein the eccentric distance (DE) is substantially equal to the measured adjustment value.

9. A nacelle for a turbojet engine comprising a thrust reverser (1) in accordance with any one of the preceding claims.

10. A use of an adjustment device (31) in a thrust reverser (1) for a device for receiving a propulsion element, such as a nacelle (2) of a turbojet engine (20), the thrust reverser (1) comprising:
- a fixed structure (4), including an element (24) for diverting at least one portion of an air flow (F2) intended to circulate in the nacelle (2),
- a cowl (3) which is movable in translation, adapted to occupy a closed position in which the cowl (3) covers the element (24) for diverting the air flow (F2), thereby ensuring the aerodynamic continuity of the nacelle (2), and an open position in which the cowl (3) releases the element (24) for diverting the air flow (F2),
- at least one displacement actuator (5) configured to displace the cowl (3) between the open position and the closed position, each displacement actuator (5) comprising a fixed portion (5a), configured to be directly mounted on the fixed structure (4) at a first anchoring position (P1) and a movable portion (5b), configured to be directly mounted on the cowl (3) at one second anchoring position (P2),
the adjustment device (31) being used to adjust the first anchoring position (P1).
